# EUROPEAN PATENT APPLICATION

(11) **EP 1 655 499 A2**
(43) Date of publication of application: **10.05.2006**
(21) Application number: 05110222.6
(22) Date of filing: 01.11.2005
(51) Int. Cl.: F16B 35/04, F16B 37/06

(54) **Positive Hold Weld Stud**

(30) Priority: 04.11.2004 US 980903
(71) Applicant: Newfrey LLC, Newark, Delaware 19711 (US)
(72) Inventor: Delcourt, Mark H., 48022, Emmet (US)
(74) Representative: Haar, Lucas Heinz Jörn

(57) **Abstract**

The present invention provides a weld stud that includes a base, a shank that has a thread and that is smaller in diameter than the base, a head that is on the opposite end to the base, and a neck located between the shaft and the head wherein the neck has a smaller diameter than either the head or the shank. Another aspect of the present invention includes a retention angle that is located between the head and the neck of the stud.

## Description

### FIELD OF THE INVENTION

The present invention generally relates to studs and fasteners and, more specifically, to a positive hold weld stud and a fastener designed to fit on the stud.

### BACKGROUND OF THE INVENTION

It is well known in the automotive industry to attach a metal weld stud having an enlarged base and a shaft with a single thread to a piece of sheet metal. Traditional threads spiral around the shaft in a continuous manner at least 14 times between the distal end of the shaft and the base. It is also common in the art to engage a nut with the threaded shaft to retain a component to the stud which is fixed to a metal portion of the vehicle body. It is also known in the art that a metal weld stud may not have threads and may be used with a push on type fastener. However, such push on fasteners are not easily removable from the stud and typically must be broken to be removed. Such breaking makes the fastener unable to be reused and, in many cases, a part which the fastener is attached to is worthless since it is unable to be reinstalled. What is needed is a weld stud that may employ a push on fastener that is self locking on engagement and easily removable without breaking.

### SUMMARY OF THE INVENTION

Accordingly, the present invention is a new approach to the use of push on fasteners for weld studs. The approach is based upon the use of a positive hold weld stud and a specially designed fastener.

Thus, in various embodiments, the present invention provides a weld stud that includes a base, a shank that has a thread and that is smaller in diameter than the base, a head that is on the opposite end to the base, and a neck located between the shaft and the head wherein the neck has a smaller diameter than either the head or the shank. Another aspect of the present invention includes a retention angle that is located between the head and the neck of the stud. In other aspects of the present invention, the stud includes a welding pedestal that is attached to the base and is opposite of the shank, such a pedestal enables the stud to be attached to a metal sheet.

In other embodiments, the present invention provides a fastening system that includes a stud that has a threaded body, a head, and a neck that is between the head and the body and a fastener that has at least one pair of tabs for fastening to the body and at least one pair of clips for fastening to the neck. A further aspect of the present invention includes the stud attached to a body panel of a motor vehicle and the fastener attached to a trim piece. In other aspects of the invention, the fastener has a recess in the top of the fastener that is designed for a tool, such as a Phillips head screwdriver, an Allen keyed wrench, or the like that is used to unscrew the fastener from the stud.

In still other embodiments, the present invention provides methods for attaching a fastener to a weld stud that includes the steps of pushing the fastener on the stud and locking at least two tabs located inside the fastener onto the neck of the stud. In still other embodiments, the present invention provides methods for attaching a fastener to a piece of metal sheet which includes the steps of welding a stud that has a retention angle to the sheet, pushing the fastener onto the stud, engaging at least one fastener tab to the threads of the stud and locking at least one fastener clip to the neck of the stud.

The positive hold weld stud and fastener of the present invention is advantageous over conventional devices in that the weld stud may be used with the fastener of the present invention or with conventional fasteners such as threaded bolts. Other advantages of the present invention are that the fasteners of the present invention may be easily removed from the positive hold weld stud without breaking, thus making it able to be reinstalled by either screwing or pushing the fastener onto the stud. Additional advantages and features of the present invention will become apparent from the following description and independent claims taken in conjunction with the accompanying drawings.

Further areas of applicability of the present invention will become apparent from the detailed description provided herein. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:

Figure 1 is a perspective view showing an automotive vehicle door assembly employing an embodiment of a weld stud of the present invention;

Figure 2 is an exploded perspective view showing an embodiment of a weld stud, a metal sheet, an automotive vehicle panel, and a fastener of the present invention;

Figure 3 is a side elevational view showing an embodiment of the weld stud;

Figure 4 is a cross sectional view taken along lines 4-4 of Figure 2 showing a weld stud, a metal sheet, a panel and fastener of the present invention;

Figure 5 is a cross sectional view taken along lines 5-5 of Figure 4 showing the weld stud and the fastener of the present invention;

Figure 6 is an exploded perspective view showing another embodiment of the weld stud, an electrical conductor and a threaded fastener;

Figure 7 is an exploded view showing a third embodiment of the weld stud, fluid lines and a threaded fastener;

Figure 8 is a cross-sectional view showing the third embodiment of the weld stud, fluid lines and a threaded fastener; and

Figure 9 is a perspective view showing an automotive frame rail assembly applying the third embodiment of the weld stud of the present invention.

### DETAILED DESCRIPTION OF THE PREFERRED EMBODIMENTS

The following description of the preferred embodiments is merely exemplary in nature and is in no way intended to limit the invention, its application, or uses. The present invention provides a welding stud and a fastener along with methods of use.

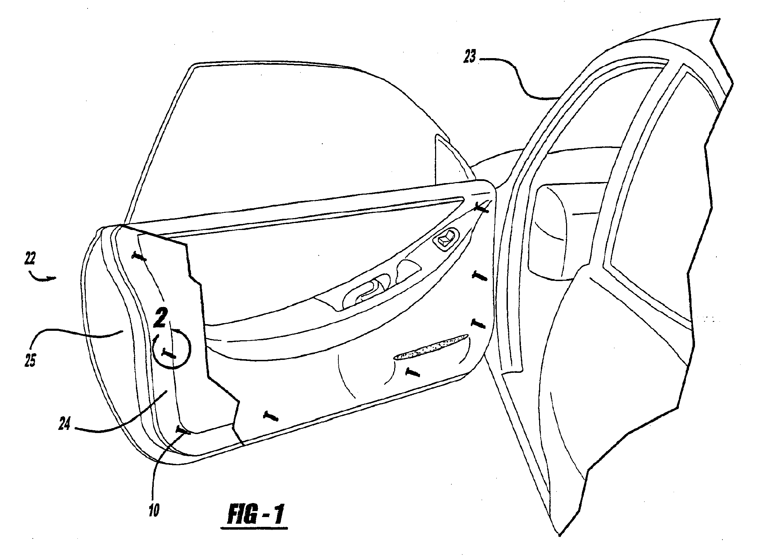

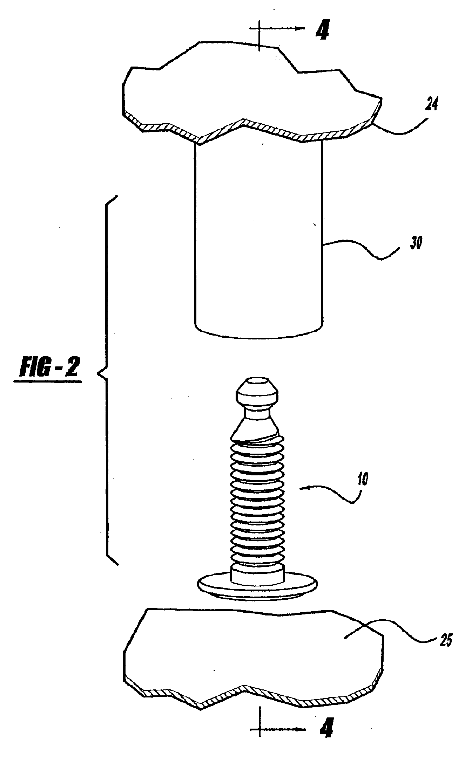

The present invention relates to a welding stud 10 which may be employed with a fastener 30 for a plurality of applications including holding body interior trim parts to body panels, securing brake lines and other fluid lines, fastening exterior panels to a vehicle, and any other applications that the stud 10 and fastener 30 may be useful in the art. Figure 1 shows the positive hold weld stud 10 of the present invention employed in a vehicle 23 having a door 22 which has a metal surface 25 to which stud 10 is welded. Trim panel 24 is fastened to weld stud 10 securing it to body panel 25. Referring to Figure 2, interior panel 24 includes fastener 30 of the present invention that engages weld stud 10 and locks onto weld stud 10. Weld stud 10 is welded by any applicable welding method known in the art, to a metal sheet 25 which may, in some embodiments, be a body panel.

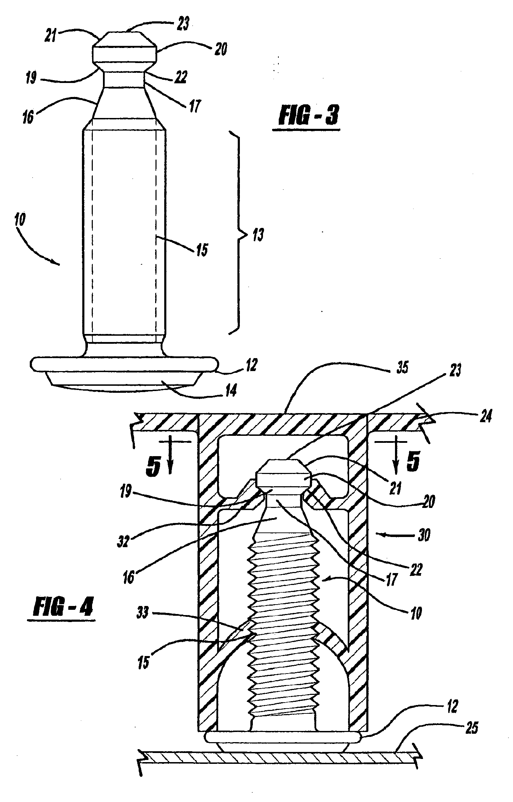

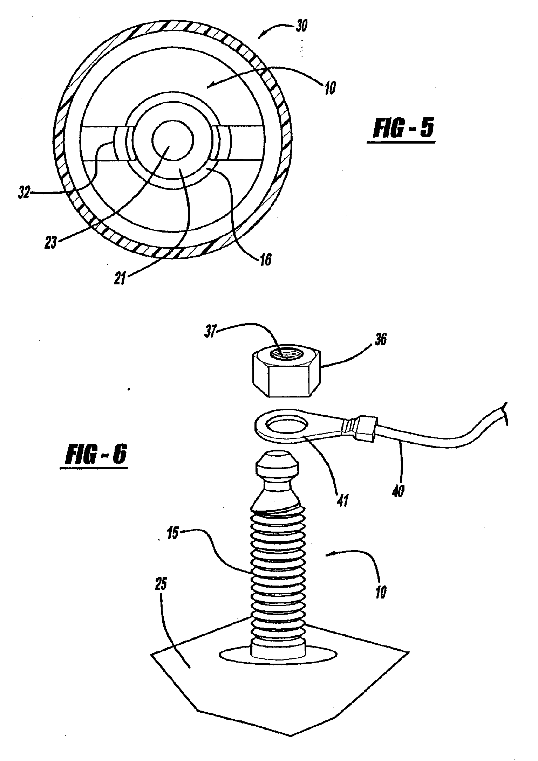

Referring to Figures 3 and 4, the weld stud includes a head 20, a reduced diameter neck 17, a shank 13, and a base 12. The shank 13 has a diameter that is larger than the head 20. The base 12 has a diameter that is larger than the shank 13 and the base 12 includes a pedestal 14 which is opposite the shank 13. The pedestal 14 is larger in diameter than the shank 13 but smaller in diameter than the base 12. A first tapered section 16 connects the larger diameter shank 13 with the neck 17. A second tapered section 19 connects the neck with the larger diametered head 20. The second tapered section 19 is the location to which fastener 30 is locked onto stud 10 and has a defined retention angle 22. The retention angle 22 is greater than 90°. In some embodiments of the present invention, the retention angle 22 is about 135° and in other embodiments, the retention angle 22 is about 150°. In a preferred embodiment of the present invention, the range that is useful for the retention angle 22 is from about 125° to about 160°. A third tapered section 21 is between the larger diametered head 20 and the flat tip 23 of the stud 10. The shank 13 has a thread 15 and may be any standard rolled thread pattern that is known in the art. The portion of the stud 10 from the first tapered section 16 to the tip 23 is smooth and has no threads.

Referring to Figure 4, the present invention includes a fastener 30 that comprises a pair of at least one pair of tabs 33 that attach to the threads 15 of weld stud 10. In this embodiment, the fastener 30 includes at least one pair of clips 32 that snap below the retention angle 22 of the stud 10. The clips 32 snap over the head 20 and are locked into place at retention angle 22. Tabs 33 have internal threading that match the thread 15 of the stud 10. To install the fastener 30, the fastener 30 is pushed onto weld stud 10 so that the clips 33 engage with the thread 15 and the clips 32 lock onto retention angle 22 of weld stud 10. To remove fastener 30 from weld stud 10, the fastener 30 is unscrewed from weld stud 10 employing the tabs 33 along the thread 15. This unscrewing force moves the fastener 30 up and forces the clips 32 over retention angle 22 and past the head 20. The fastener 30 is unscrewed until the tabs 33 are clear of thread 15. In a preferred embodiment, the stud 10 is painted along with panel 25. In such embodiment, the paint does not inhibit the installation of push on fastener 30.

In another preferred embodiment, a recess 35 is formed in the top of the fastener 30. In such an embodiment, the recess 35 may have the form of a Philips head, torex, slotted, Allen key or the like, such that a tool may be engaged in recess 35 to facilitate unscrewing fastener 30 from stud 10. The fastener 30 may be made from a plastic material. The fastener 30 may be made from resin materials or blends of resin-like materials. The fastener 30 may be made of a material that is fiber reinforced. The fastener 30 may be made from a material that is conductive to electricity.

Stud 10 is formed by a cold headed process through which a blank is fed between a punch and die and is forcefully compressed until the desired shape is formed. The threads 15 are rolled onto the shank 13 of the stud 10 using a standard thread rolled die known in the art. In the preferred embodiment, the thread 15 is a M6X1 metric thread. Other thread patterns that are known in the art may be used on the body 13 of the stud 10 depending on the application of the present invention. The stud 10 may be made from SAE1010 steel with a zinc fmish that has a cold rolled thread. The stud 10 may be made from any steel alloy that is known in the art and useful for such a stud 10. The stud 10 is made from a metal or an alloy that is conductive to electricity.

The stud welding sequence is as follows. Stud 10 is fed into the collet of a weld head or gun (not shown) and the unit is cycled forward until the stud touches panel 25, thereby generating a "stud on work" signal to the electronic control unit. The weld gun subsequently lifts the stud approximately 1.2 mm off the panel. A pilot arc is then generated to ionize an air gap between the proximal end of the stud and the panel. Next, the welding current is turned on in order to generate molten material at the proximal end of the stud and at the surface of the panel. Finally, the weld gun then cycles forward to plunge the stud into the molten puddle of material. The molten weld puddle solidifies and the weld gun retracts, whereby the stud is permanently welded to the panel 25. Welding such a stud 10 to a metal panel 25 is disclosed in U.S. Patent No. 6,337,457 to Rungheimer; U.S. Patent No. 6,215,085 to Cummings; U.S. Patent No. 5,977,506 to von Daniken; U.S. Patent No. 5,938,946 to Kurz; U.S. Patent No. 5,277,353 to Budig et al.; and U.S. Patent No. 4,797,529 to Schmitt et al., all of which are incorporated by reference herein.

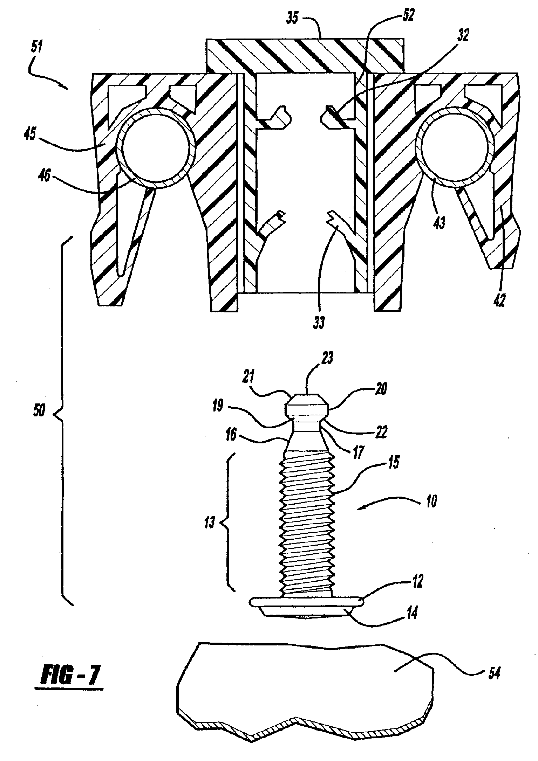

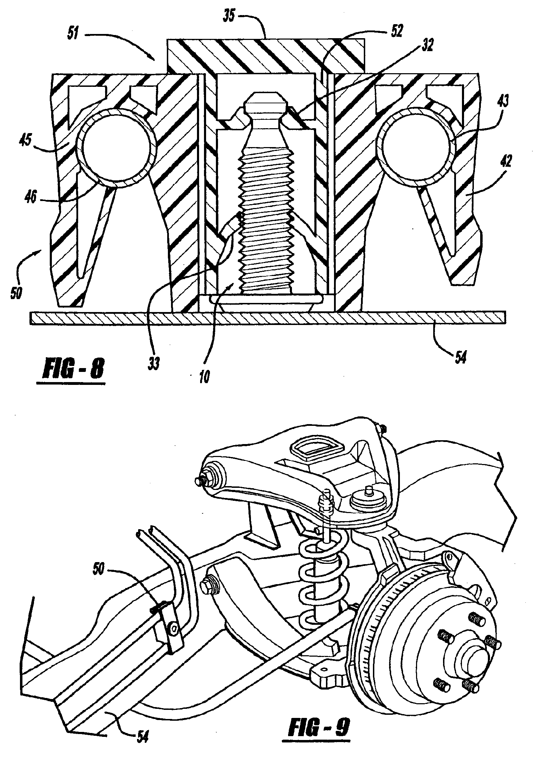

In an alternative embodiment, Figure 6 shows weld stud 10 attached to a metal sheet 25 and an alternate fastener 36 is employed. Fastener 36 has an internally threaded female bore 37 which fits onto thread 15. An advantage of this invention is that weld stud 10 may be used with a fastener with a thread 37 similar to the fastener 36 or may be used with a push on fastener similar to fastener 30. In an example of the alternate embodiment, electrical connector 40 having an eyelet 41 and a wire 42 may be connected to stud 10 by placing eyelet 41 on stud 10 and fastening electrical component 40 to stud 10 by fastener 36 which is screwed onto stud 10. According to the present invention, any component that is known in the art to attach to a metal stud may be attached to stud 10 and retained by employing internally threaded fastener 36. One or more washers or spacers (not shown) may be employed with stud 10 and internally threaded fastener 36.

Referring to Figures 7, 8 and 9, the weld stud 10 includes a head 20, a reduced diameter neck 17, a shank 13, and a base 12. The shank 13 has a diameter that is larger than the head 20. The base 12 has a diameter that is larger than the shank 13 and the base 12 includes a pedestal 14 which is opposite the shank 13. Pedestal 14 is larger in diameter than the shank 13 but smaller in diameter than the base 12. The first tapered section 16 connects the larger diameter shank 13 with the neck 17. A second tapered section 19 connects the neck with the larger diameter head 20. The second tapered section 19 is the location to which fastener 52 is locked onto stud 10 and has a defined retention angle 22. The retention angle 22 is greater than 90°. In some embodiments of the present inventions, the retention angle 22 is about 135° and in other embodiments the retention angle 22 is about 150°. In a preferred embodiment of the invention, the range that is useful for retention angle 22 is from about 120° to about 160°. A third tapered section 21 is between a larger diameter head 20 and the flat tip 23 of the stud 10. The shank 13 has a thread 15 and may be any standard rolled thread pattern that is known in the art. The portion of the stud 10 from the first tapered section 16 to the tip 23 is smooth and has no threads.

In this embodiment, threaded fastener 52 is part of a fastening assembly 51 which may be used to, for example, to fasten fluid lines to a frame rail of a car. Fastener 51 includes the threaded fastener 52 comprising at least one pair of tabs 32 and at least one pair of clips 33. The threaded fastener 52 is part of fastener system 51 which has a separate clip type fastener 42 which holds in a fluid line 43 such as fuel or a brake fluid and may include a second clip type fastener 45 which holds a second fluid line 46. Weld stud 10 is welded on to frame rail 54. Then fastener system 51 is clipped onto fluid lines 46, 43 and is fastened onto weld stud 10 such that tabs 32 are locked onto retention angle 22. Fastener 52 comprises a pair of at least one pair of tabs 33 that are attached to the threads 15 of the weld stud 10. In this embodiment, fastener 52 includes at least one pair of clips 32 that snap below retention angle 22 of the stud 10. The clips 32 snap over the head and lock into place over retention angle 22. Tabs 33 have internal threading that match the thread 15 of the stud 10. To install the fastener system 51, the fastener system is pushed onto the weld stud 10 so that clips 33 engage with the threads 15 and the clips 32 lock onto the retention angle 22 of weld stud 10. To remove fastener system 51 from weld stud 10, the fastener 52 is unscrewed from the weld stud employing the tabs 33 along the thread 15. This unscrewing force moves the fastener 52 up and forces the clips 32 over the retention angle 22 and past the head 20. The fastener 52 is unscrewed until tabs 33 are clear of thread 15.

In some embodiments, a recess 35 is formed in the top of the fastener 52. In such embodiments, the recess 35 may have the form of a Phillips head, Torex, slotted, Allen key, or the like, such that a tool may be engaged in recess 35 to facilitate unscrewing fastener 52 from stud 10. The fastener system 51 may be made from a plastic material. The fastener system 51 may be made from resin materials or blends of resin like materials. The fastener system 51 may be made of a material that is fiber reinforced.

The examples and other embodiments described herein are exemplary and are not intended to be limiting in describing the full scope of apparatus, systems, compositions, materials, and methods of this invention. Equivalent changes, modifications, variations in specific embodiments, apparatus, systems, compositions, materials and methods may be made within the scope of the present invention with substantially similar results. Such changes, modifications or variations are not to be regarded as a departure from the spirit and scope of the invention.

## Claims

1. A stud (10), in particular a weld stud comprising:
a base (12);
a shank (13) having an exterior pattern with a diameter smaller than a diameter of the base (12);
a head (20) located distal from the base (12); and
a neck (17) located between the shank (13) and the head (20) wherein the diameter of the neck (17) is smaller than a diameter of the head (20) and a diameter of the shank (13).

2. A stud according to Claim 1 further comprising a welding pedestal (14) projecting from the base (12) opposite the shank (13), the pedestal (14) being coaxially aligned with the base (12) and the shank (13), and the pedestal (14) having a diameter smaller than the diameter of the base (12) and larger than the diameter of the shank (13).

3. A stud according to anyone of Claims 1 and 2, wherein the head (20) and neck (17) are substantially free of threads.

4. A stud according to anyone of Claims 1 to 3 further comprising a retention angle (22) located between the head (20) and the neck (17), wherein the retention angle (22) is greater than 90°.

5. A stud according to Claim 4, wherein the retention angle (22) is at least 125°.

6. A stud according to Claim 5, wherein the retention angle (22) is about 135°.

7. A stud according to anyone of Claims 1 to 6, wherein the stud is welded to a body panel (25) of a motor vehicle.

8. A stud according to anyone of claims 1 to 7, wherein the shank (13) has a thread (15).

9. A stud according to Claim 8, wherein the thread (15) is a M6X1 thread.

10. A stud according to anyone of Claims 1 to 9, wherein the shank (13) has a length of less than 25 mm.

11. A stud according to anyone of Claim 1 to 10 further comprising a fastener (30) removably attached to the stud.

12. A stud according to Claim 11, wherein the fastener (30) is part of an interior trim piece (24) of an automotive vehicle.

13. A fastening system comprising:
a stud (10) according to anyone of claims 1 to 10; and
a fastener (30) comprising first members (33) removably fastening to the shank (13) and second members (32) removably fastening to the neck (17).

14. A system according to Claim 13, wherein the fastener (30) is made of a plastic like material.

15. A system according to Claim 13, wherein the second members (32) are locked into place by the retention angle (22).

16. A system according to anyone of Claims 13 to 15 further comprising unlocking the second members (32) by unscrewing the fastener (30) on the threads (15) of the shank (13).

17. A system according to anyone of Claim 13 to 16, wherein the fastener (30) is part of a trim piece (24) of a motor vehicle.

18. A system according to anyone of Claims 13 to 17 further comprising a recess (35) in a top exterior surface of the fastener (30) wherein the recess (35) is designed for the engagement of a tool.

19. A method of attaching a fastener to a stud (10) according to anyone of claims 1 to 10, the method comprising:
pushing the fastener onto the stud;
engaging at least two clips inside the fastener to the shank; and
removably attaching at least two tabs inside the fastener into the neck and onto the head.

20. A method of attaching a fastener to a metal sheet, the method comprising:
welding a stud according to anyone of claims 1 to 10 to the sheet;
pushing the fastener onto the stud;
engaging at least one fastener tab with the shank; and
removably attaching at least one fastener clip on the head;

21. A method according to Claim 20, wherein the metal sheet is a body panel of a motor vehicle.
